(19) Europäisches Patentamt
European Patent Office
Office européen des brevets

(11) **EP 4 779 524 A1**

(12) **EUROPEAN PATENT APPLICATION**

(43) Date of publication:
**22.07.2026 Bulletin 2026/30**

(21) Application number: **25221731.0**

(22) Date of filing: **09.12.2025**

(51) International Patent Classification (IPC):
***G06N 3/08*** *(2023.01)*     ***G06N 3/092*** *(2023.01)*

(52) Cooperative Patent Classification (CPC):
**G06N 3/08; G06N 3/092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.01.2025 KR 20250009013**
           **24.03.2025 KR 20250037380**

(71) Applicants:
• **Samsung Electronics Co., Ltd**
**Suwon-si, Gyeonggi-do 16677 (KR)**
• **Korea University Research and Business Foundation**
**Seoul 02841 (KR)**

(72) Inventors:
• **JANG, Sujin**
**16678 Suwon-si (KR)**
• **KO, Heeju**
**02841 Seoul (KR)**
• **KIM, Sangpil**
**02841 Seoul (KR)**
• **KIM, Sungjune**
**02841 Seoul (KR)**
• **OH, Gyeongrok**
**02841 Seoul (KR)**
• **LEE, Dongwook**
**16678 Suwon-si (KR)**
• **JI, Dae Hyun**
**16678 Suwon-si (KR)**

(74) Representative: **Arnold & Siedsma**
**Bezuidenhoutseweg 57**
**2594 AC The Hague (NL)**

(54) **METHOD AND DEVICE WITH POLICY UPDATE**

(57) A processor-implemented method includes according to a learned policy, determining, based on input data, a movement path of an agent, in response to the agent finishing moving, obtaining feedback determined based on whether a target point is reached, and based on the feedback, updating a parameter of the learned policy.

```
                        ┌───────────┐
                        │   Start   │
                        └─────┬─────┘
                              │                            710
    ┌─────────────────────────▼──────────────────────────────┐
    │ According to learned policy, determine, based on input  │
    │            data, movement path of agent                 │
    └─────────────────────────┬──────────────────────────────┘
                              │                            720
    ┌─────────────────────────▼──────────────────────────────┐
    │ In response to agent finishing moving, obtain feedback  │
    │   determined based on whether target point is reached   │
    └─────────────────────────┬──────────────────────────────┘
                              │                            730
    ┌─────────────────────────▼──────────────────────────────┐
    │   Based on feedback, update parameter of learned policy  │
    └─────────────────────────┬──────────────────────────────┘
                              │
                        ┌─────▼─────┐
                        │    End    │
                        └───────────┘
```

**FIG. 7**

EP 4 779 524 A1

**Description**

BACKGROUND

1. Field

The following description relates to a method and device with a policy update.

2. Description of Related Art

Technologies that perform decision-making based on data may be utilized across various fields. Particularly, technologies that enable systems to interact with an environment and make appropriate decisions may be used in areas such as automation, optimization, and autonomous systems. **In** these technologies, methods that determine predetermined actions based on input data may be used. A decision-making process may involve using pre-trained models or a method of adjusting an action by reflecting information from an environment. Additionally, to enhance the accuracy of decision-making, methods may evaluate results against given goals and incorporate these evaluations.

Furthermore, when an environment changes or new variables arise, it may be challenging to derive optimal results using only typical decision-making methods. Further, while typical systems may correct or adjust decisions based on the given information, such typical systems may not correct or adjust decisions by utilizing additional evaluation results. Thus, there may be insufficient performance in such typical systems that make decisions based on input data.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method includes according to a learned policy, determining, based on input data, a movement path of an agent, in response to the agent finishing moving, obtaining feedback determined based on whether a target point is reached, and based on the feedback, updating a parameter of the learned policy.

Preferably, the obtaining of the feedback includes obtaining the feedback for each episode.

Preferably, the updating of the parameter includes based on the feedback, updating a gradient of the learned policy, and based on the updated gradient, updating the parameter of the learned policy.

Preferably, the updating of the parameter further includes stochastically inverting a portion of the updated gradient.

Preferably, the inverting of the portion of the updated gradient further includes according to a predefined probability value, determining whether to invert the updated gradient, and in response to a determination to invert the updated gradient, inverting a sign of the updated gradient.

Preferably, the inverting of the sign of the updated gradient further includes adjusting a magnitude of the inverted gradient according to a predefined coefficient.

Preferably, he updating of the parameter includes updating a parameter comprising a weight of an artificial neural network model configured to implement the learned policy.

Preferably, the artificial neural network model is implemented as a reinforcement learning-based vision-language navigation (VLN) model.

Preferably, the obtaining of the feedback includes, in response to the agent reaching the target point, obtaining positive value feedback, and in response to the agent failing to reach the target point, obtaining negative value feedback.

Preferably, the updating of the parameter of the learned policy includes, in response to the obtaining of the positive value feedback, applying a first predefined weight to the parameter of the learned policy, and in response to the obtaining of the negative value feedback, applying a second predefined weight to the parameter of the learned policy.

Preferably, the obtaining of the feedback includes obtaining, based on a distance between a final location of the agent and the target point, continuous value feedback.

Preferably, the method includes determining whether to generate the feedback based on whether the agent has finished an episode, wherein the episode includes a series of steps and each of the steps includes a respective action performed by the agent along the movement path, and wherein the obtaining of the feedback includes generating feedback based on comparison between a final step of the steps and a target point, in response to determining to generate the feedback.

In one or more general aspects, a computer program comprising instructions which, when the program is executed by a computer, cause the computer to carry out the steps of any one, any combination, or all of operation and/or methods described herein.

In one or more general aspects, an electronic device includes one or more processors comprising processing circuitry, and memory comprising one or more storage media storing instructions that, when executed individually or collectively by the one or more processors, cause the electronic device to, according to a learned policy, based on input data, determine a movement path of an agent, in response to the agent finishing moving, obtain feedback determined based on whether a target point is reached, and based on the feedback, update a parameter of the learned policy.

Preferably, for the obtaining of the feedback, the execution of the instructions causes the electronic device to obtain the feedback for each episode.

Preferably, for the updating of the parameter, the execution of the instructions causes the electronic device to, based on the feedback, update a gradient of the learned policy, and based on the updated gradient, update a parameter of the learned policy.

Preferably, for the updating of the parameter, the execution of the instructions causes the electronic device to stochastically invert a portion of the updated gradient.

Preferably, for the inverting of the portion of the updated gradient, the execution of the instructions causes the electronic device to according to a predefined probability value, determine whether to invert the updated gradient, and in response to a determination to invert the updated gradient, invert a sign of the updated gradient.

Preferably, for the inverting of the sign of the updated gradient, the execution of the instructions causes the electronic device to update a parameter comprising a weight of an artificial neural network model configured to implement the learned policy.

Preferably, for the obtaining of the feedback, the execution of the instructions causes the electronic device to, in response to the agent reaching the target point, obtain positive value feedback, and in response to the agent failing to reach a target point, obtain negative value feedback.

In one or more general aspects, a processor-implemented method includes determining whether to generate feedback based on whether an agent has finished an episode, wherein the episode may include a series of steps and each of the steps may include a respective action performed by the agent, and generating feedback based on comparison between a final step of the steps and a target point, in response to determining to generate the feedback.

Other features and aspects will be apparent from the following detailed description, the drawings, and the claims.

BRIEF DESCRIPTION OF THE DRAWINGS

FIG. 1A illustrates an example of a vision-language navigation (VLN) model according to one or more embodiments.

FIG. 1B illustrates an example of an episode in a VLN model according to one or more embodiments.

FIG. 2 illustrates an example of a policy update method according to one or more embodiments.

FIG. 3 illustrates an example of a policy update method according to one or more embodiments.

FIG. 4 illustrates an example in which binary feedback is provided in a policy update method according to one or more embodiments.

FIG. 5 illustrates an example of a detailed instruction and an episode performed accordingly in a policy update method according to one or more embodiments.

FIG. 6 illustrates an example of a process of applying a stochastic gradient reversion (SGR) technique in a policy update method according to one or more embodiments.

FIG. 7 illustrates an example of a policy update method according to one or more embodiments.

FIG. 8 illustrates an example of an electronic device according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and specifically in the context on an understanding of the present disclosure. Terms, such as those defined in commonly used dictionaries, are to be interpreted as having a meaning that is consistent with their meaning in the context of the relevant art and specifically in the context of the present disclosure, and are not to be construed as an ideal or excessively formal meaning unless expressly so defined herein.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

The examples may be implemented as various types of products such as, for example, a personal computer, a laptop computer, a tablet computer, a smart phone, a television, a smart home appliance, an intelligent vehicle, a kiosk, and a wearable device. Hereinafter, examples are described in detail with reference to the accompanying drawings. In the drawings, like reference numerals are used for like elements.

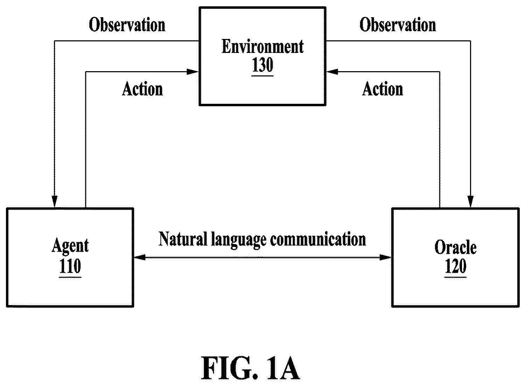

FIG. 1A illustrates an example of a vision-language navigation (VLN) model according to one or more embodiments.

Referring to FIG. 1A, in the VLN model, an agent 110, an oracle 120, and an environment 130 may interact with one another, and the agent 110 may determine an action based on an observation in the environment 130 and perform natural language communication with the oracle 120.

The agent 110 may determine a movement path based on input data given in the environment 130 and move to a target point. The agent 110 may be implemented as an autonomous driving robot, an artificial intelligence-based navigation system, a navigation system within a virtual simulation, and the like. However, examples are not limited thereto. Additionally, the agent 110 may move within the environment 130 by utilizing a policy learned based on reinforcement learning and may determine an action to achieve a predetermined goal. The agent 110 may also be referred to as an explorer or an autonomous system. A policy may be a function that determines which action an agent selects in a predetermined state in a given environment.

The environment 130 may be a space in which the agent 110 and the oracle 120 interact with each other and may include a virtual environment, a physical environment, and/or a combination thereof. The environment 130 may be an indoor space (e.g., home or office) and/or an outdoor space (e.g., road or park) and may also be implemented as a simulated virtual environment (e.g., three-dimensional (3D) simulated space). The environment 130 may also be referred to as an environment map or a workspace.

An observation may be information collected by the agent 110 and the oracle 120 from the environment 130 and may include an image, distance sensor data, light detection and ranging (LiDAR) data, text information, and the like. The agent 110 may obtain an observation through a camera, a sensor, and/or other input devices and determine a moving direction based on the obtained observation. An observation may also be referred to as input data or environmental data.

An action may be an operation performed by the agent 110 and the oracle 120 on the environment 130. The agent 110 may perform an action, such as moving (e.g., moving left, moving forward, turning in a predetermined direction) or stopping. The oracle 120 may also perform a predetermined action such as highlighting a predetermined point within the environment 130 and/or providing feedback on a target location. An action may also be referred to as a motion and/or a control command.

The oracle 120 may be a system that evaluates the navigation performance of the agent 110 and provides feedback during a testing phase. The oracle 120 may operate based on feedback provided directly by a person, and/or an artificial intelligence-based system may automatically perform an evaluation. For example, the oracle 120 may determine whether a target point is reached to generate feedback of success or failure and may also provide a distance-based evaluation result. The oracle 120 may also be referred to as an evaluation system or a feedback provider.

Natural language communication is a method of transmitting information between the agent 110 and the oracle 120 and may include a sentence expressed in natural language. For example, the oracle 120 may transmit, to the agent 110, a sentence such as "move left". Natural language communication may include a voice command, a text command, and/or other linguistic expressions and may be combined with a speech recognition system. Natural language communication may also be referred to as language-based interaction or instruction delivery.

The agent 110, the oracle 120, and the environment 130 may interact with one another, and the agent 110 and the oracle 120 may collect an observation from the environment 130 and perform an action. Additionally, the agent 110 and the oracle 120 may exchange information through natural language communication and update a policy based on the information.

For example, the environment 130 may be a 3D space generated by simulating the interior of a home. The agent 110 may be an autonomous mobile robot that may perform a task of moving to a predetermined location within the home. The oracle 120 may be an artificial intelligence (AI)-based evaluation system that may analyze the exploration performance of the agent 110 and provide feedback.

The agent 110 in an initial state may receive a natural language instruction. For example, the agent 110 may receive, from the oracle 120, an instructions such as "Move from the living room to the kitchen". The instruction may be provided in voice and/or text form. Natural language communication may be expressed as a command and/or an instruction.

The agent 110 may obtain an observation from the environment 130. For example, information such as "Currently in the living room", "There is a sofa ahead", and "The kitchen is to the left". An observation may be provided in the form of a red, green, blue (RGB) image, depth information, location data, and the like and may also be expressed as sensory data or scene understanding.

The agent 110 may determine a movement path and perform an action based on the learned policy. For example, the agent 110 may move in ways such as "Move 2 meters (m) forward" and "Turn 90 degrees to the right and move 1 m". The movement technique may be continuous navigation or grid-based movement, and an action may be expressed as a movement command or direction control.

As information in the environment 130 changes, the agent 110 may continuously update an observation. For example, the agent 110 may obtain new observation information such as "Currently at the kitchen entrance" or "There is a table in front" and redetermine a path based on the new observation information.

When the agent 110 reaches or fails to reach a target point, the oracle 120 may perform an evaluation. For example, an evaluation result such as "target reached successfully", "target not reached, final location: hallway" may be generated. The oracle 120 may generate feedback by comparing the final location of the agent 110 with the target point, and the feedback may be provided as binary feedback (success = +1, failure = -1) or continuous distance-based reward.

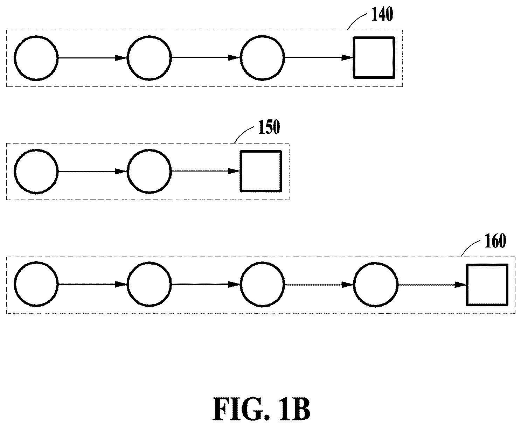

In a policy update method, a policy may be updated on an episode-by-episode basis rather than being modified at every step. For example, the agent 110 may adjust a policy based on feedback provided from the oracle 120 in response to completing the entire movement path without immediate policy modification during an individual movement process. Accordingly, the method and device of one or more embodiments may prevent a policy from becoming unstable due to a short-term action change and may more consistently improve a policy. An example of an episode may be described in detail with reference to FIG. 1B.

A VLN model may not guarantee desired performance in a real environment caused by low generalization performance due to limitations of learning data. While a typical method and device may apply a test-time adaptation (TTA) to solve this issue, this approach fails to effectively overcome domain differences as the approach causes error accumulation and overfitting issues. Therefore, the method and device of one or more embodiments may include a more reliable policy update method for implementing a VLN task.

The policy update method of one or more embodiments may solve a domain difference issue that occurs when a VLN model is tested through an episode-by-episode feedback technique. The policy update method of one or more embodiments may collect feedback from a test environment and adjust a policy based on the feedback, such that an agent may operate stably in a new environment.

However, the policy update method is not necessarily intended to solve only the issue described above. The policy update method may have various other effects. For example, a reinforcement learning-based policy network of one or more embodiments may dynamically update a policy by utilizing feedback, thereby improving the adaptability and reliability of a VLN model. Additionally, the policy update method may not be limited to a VLN model. For example, the policy update method may also be applied to robotics including an autonomous agent operating in various environments or other AI systems that perform decision-making based on a learned policy and a multi-modal computer vision application.

FIG. 1B illustrates an example of an episode in a VLN model according to one or more embodiments. The description provided with reference to FIG. 1A may substantially equally apply to FIG. 1B.

Referring to FIG. 1B, an episode may be defined as a series of navigation processes in which the agent 110 reaches a target point within the environment 130, and a step may be a unit in which the agent 110 performs a single action within an episode.

An episode may include a predetermined number of steps, which may vary depending on the complexity of the environment 130 and/or a navigation path. FIG. 1B illustrates three episodes (e.g., a first episode 140, a second episode 150, and a third episode 160) as an example. The three episodes may include four steps, three steps, and five steps, respectively. The first episode 140 may include a total of four steps, the second episode 150 may include a total of three steps, and the third episode 160 may include a total of five steps. An episode may be referred to as a navigation process and/or a navigation sequence, and a step may be referred to as a navigation unit and/or an action frame.

For example, it may be assumed that the environment 130 is the inside of a home and the agent 110 may be required or determined to move from a predetermined room to the kitchen. The first episode 140 may include four steps, such as "living room → hallway → kitchen entrance → kitchen," and the second episode 150 may include three steps, such as "living room → kitchen entrance → kitchen." In addition, the third episode 160 may include five steps, such as "living room → hallway → study → kitchen entrance → kitchen." Each of the episodes may include a same starting step (e.g., "living room") and a same ending step (e.g., "kitchen").

The number of steps in each episode may vary depending on the structure of the environment 130, the navigation path, the location of an obstacle, and the like. In a predetermined episode, there may be an optimal path that needs only a small number of steps to reach a target point. In another episode, the number of steps may increase in the process of bypassing an obstacle or redetermining a path. For example, even with the same starting point and the same target point, the number of steps performed by the agent 110 may vary depending on the policy learning a navigation path.

According to an example, a policy update may be performed on an episode-by-episode basis rather than at each individual step. For example, the agent 110 may obtain feedback from the oracle 120 in response to reaching or failing to reach a target point and update a policy based on the feedback. By performing the policy update on the episode-by-episode basis rather than at each individual step, the method and device of one or more embodiments may achieve more stable learning than a method and device that changes a policy for each single action.

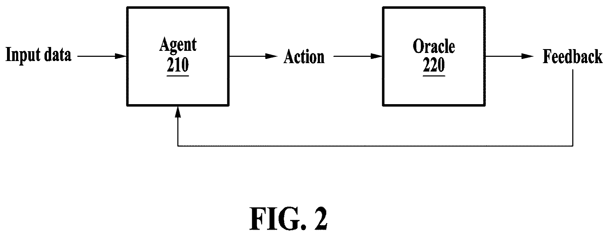

FIG. 2 illustrates an example of a policy update method according to one or more embodiments. The description provided with reference to FIGS. 1A and 1B may also apply to FIG. 2.

Referring to FIG. 2, an agent 210 may perform an action based on input data, and an oracle 220 may evaluate the action of the agent 210 and provide feedback to the agent 210. The provided feedback may be used to update a policy of the agent 210.

A policy update method according to an example may describe how to adapt an already trained policy network (e.g., a VLN model) in a test phase (inference). For example, unlike the typical training process, the policy update method of one or more embodiments may operate such that the policy network may be adapted to a new environment by updating a policy based on a given environment and feedback at test time. For example, the agent 210 may perform navigation based on the trained policy network and may receive feedback from the oracle 220 in response to the navigation being completed. In this process, the agent 210 may adjust a policy through direct experience in a test environment without needing pre-trained data.

A policy update process according to an example may include adapting a model using only feedback without a new dataset in a test environment. The agent 210 may perform navigation in a given environment based on a pre-learned policy. In response to the navigation being completed, the oracle 220 may evaluate a navigation result of the agent 210 and provide feedback. The feedback may reflect whether the agent 210 reaches a target point. For example, when the target point is reached, the feedback may be set to F=+1, and when the target point is not reached, the feedback may be set to F=-1.

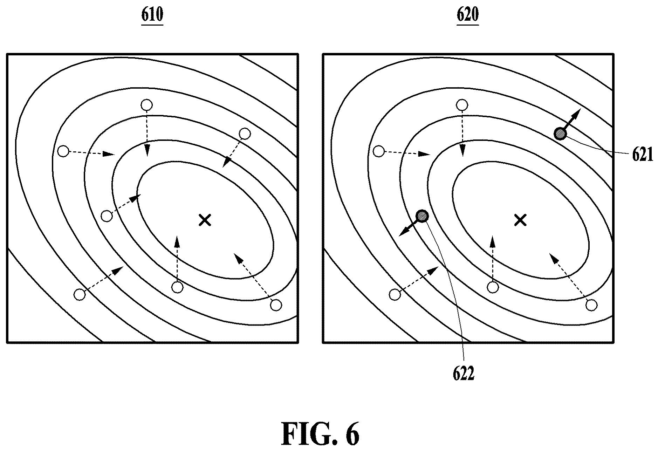

The agent 210 may directly update the policy based on the feedback provided by the oracle 220. A policy update may be performed by applying stochastic gradient reversion (SGR) and may be performed by inverting or scaling the magnitude of a portion of a gradient according to a predetermined probability Through this, the method and device of one or more embodiments may avoid overfitting to a predetermined failure pattern and may adjust a policy to achieve more general navigation in various environments. An example of an operating method of SGR is described in detail below with reference to FIG. 6.

A policy update may be performed on an episode-by-episode basis rather than on a step-by-step basis. For example, the agent 210 of one or more embodiments may update a policy only in response to one navigation process being completed, rather than modifying a policy at each step in a test environment, thereby improving a policy such that the policy is adapted to an environment while maintaining consistency in a test environment.

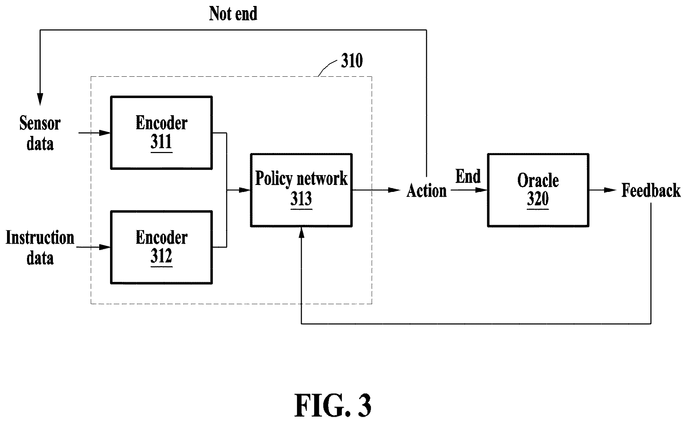

FIG. 3 illustrates an example of a policy update method according to one or more embodiments. The description provided with reference to FIGS. 1A to 2 may also apply to FIG. 3.

Referring to FIG. 3, input data may include test data $X = \{X_1, X_2, ..., X_n\}$ that are continuously streamed at an online test time. $X_n$ may include instruction data (e.g., a natural language instruction $I_n$) and sensor data (e.g., image data).

The natural language instruction $I_n$ may include a navigation goal for the agent 310 to perform and may include instructions such as "Move from the living room to the kitchen" or "Go out through the door and into the hallway." A natural language instruction may be provided as speech or text.

Initial sensor data $s_n^0$ may be the starting point of navigation of the agent 310 and may be provided as a 360° panoramic view, for example. The sensor data may include omnidirectional visual information that the agent 310 may use to recognize a surrounding environment within the environment 130.

The sensor data may be processed by an encoder 311, and the instruction data may be processed by an encoder 312. The encoders 311 and 312 may each convert input data into a representation in a vector form to transfer the input data to a policy network 313. The policy network 313 may be an artificial neural network model that approximates a policy. The policy network 313 may be a neural network that may mathematically model a policy and learn the policy.

The policy network 313 may determine an action to perform in a current state based on a learned policy $\pi_\theta$. The policy network 313 may be based on a probability distribution such as Equation 1 below, for example.

Equation 1:

$$a_t \sim \pi_\theta(a_t | s_t)$$

In Equation 1, $s_t$ is a current state and may include sensor data converted through the encoder 311, and at is an action selected by the policy network 313 and may include an action such as the movement or rotation of the agent 310.

When the agent 310 performs an action based on the policy $\pi_\theta$, a navigation trajectory $\tau$ may be generated. The navigation trajectory $\tau$ may represent a series of states and a set of actions performed by the agent 310 until the navigation is completed and may be defined by Equation 2 below, for example.

Equation 2:

$$\tau = (s_t, a_t)_{t=0}^{T-1}$$

In Equation 2, $\tau$ may denote the entire navigation trajectory performed by the agent 310, and T may denote the total number of steps performed by the agent 310 during a navigation process.

For example, the agent 310 may start from an initial state $s_0$, select an action based on a policy, and continuously accumulate states and actions to form a navigation trajectory $\tau$ until the final target point is reached and/or the navigation is terminated.

An oracle 320 may evaluate a navigation result of the agent 310 and provide feedback F. Feedback may be defined by Equation 3 below, for example, depending on whether a target is reached.

Equation 3:

$$F = \begin{cases} +1, when\ an\ agent\ reaches\ a\ target\ point \\ -1, when\ an\ agent\ fails\ to\ reach\ a\ target\ point \end{cases}$$

Feedback may also be provided as distance-based continuous reward values. For example, feedback may be expressed by Equation 4 below, for example, considering the distance $d(s_T, s^*)$ between the final location $s_T$ of the agent 310 and the target point $s^*$.

Equation 4:

$$F = -d(s_T, s^*)$$

A method of providing feedback is not limited to Equations 3 and 4.

A policy update may be performed on an episode-by-episode basis. For example, instead of updating a policy at each individual step, the policy may be updated based on feedback provided by the oracle 320 in response to the completion of a navigation process (e.g., in response to the completion of an episode).

The policy update may be performed through a reinforcement learning-based policy optimization function such as Equation 5 below, for example.

Equation 5:

$$J(\pi_\theta) = \mathbb{E}_{\tau \sim \pi_\theta} \left[ \sum_{t=0}^{T-1} G_t \right]$$

In Equation 5, $J(\pi_\theta)$ may be a target function to optimize the policy $\pi_\theta$, $G_t$ may be an expected reward at a time t, $\tau \sim \pi_\theta$ may be path sampling according to the policy $\pi_\theta$. $G_t$ may be expressed by Equation 6 below, for example.

Equation 6:

$$G_t = \sum_{i=1}^{T-t} \gamma^{i-1} R_{t+i}$$

In Equation 6, Rt is a reward at the time t and may include the feedback F, and $\gamma$ is a discount factor and may adjust the contribution of a future reward.

The policy update is performed on an episode-by-episode basis, so a reward at every step may be 0, and F may be applied only at the last step. Therefore, the final reward function may be simplified as expressed in Equation 7 below, for example.

Equation 7:

$$J(\pi_\theta) = \mathbb{E}_{\tau \sim \pi_\theta} \left[ \sum_{t=0}^{T-1} G_t \right] = \mathbb{E}_{\tau \sim \pi_\theta} \left[ \sum_{t=0}^{T-1} \gamma^{T-t-1} F \right]$$

In Equation 7, $\gamma^{T-t-1}F$ is a reinforcement element and may be the way the agent 310 updates a policy based on feedback received at the last step.

A policy gradient $\nabla_\theta J(\pi_\theta)$ may be approximately expressed as in Equation 8 below, for example.

Equation 8:

$$\nabla J(\pi_\theta) \approx \mathbb{E}_{a_t, s_t \sim \tau} \left[ \sum_{t=0}^{T-1} \nabla_\theta \log \pi_\theta(a_t \mid s_t) \gamma^{T-t-1} F \right]$$

The policy gradient may be a directional vector indicating how a decision made by a policy needs to be adjusted based on success/failure. In Equation 8, $\nabla_\theta \log \pi_\theta(a_t|s_t)$ is the derivative of a logarithmic value of the probability of selecting the action at in the state $s_t$ with respect to the policy parameter θ and may be used to increase or decrease the probability of performing a predetermined action. For example, $\nabla_\theta \log \pi_\theta(a_t|s_t)$ is an indicator of how important a predetermined action is. For example, this indicator may be updated more significantly when the predetermined action is a correct action.

However, when learning is performed continuously on a failed path, there may be a probability that a pattern of moving in a wrong direction is reinforced. For example, blindly following a gradient, even in cases of failure, may lead to getting stuck in a predetermined failure pattern.

The agent 310 may stochastically invert a portion of an updated gradient. The agent 310 may invert a portion of the updated gradient and induce the agent 310 to perform navigation in various ways. For example, the agent 310 may not completely learn in the opposite direction even in cases of failure but may be guided to adjust one or more gradients randomly to learn a new pattern.

For example, as expressed by Equation 9 below, for example, the agent 310 may use a gradient mask m to transform a portion of a gradient.

Equation 9:

$$m \sim M = \begin{cases} \frac{1}{1-p}, & w.p. \quad 1-p, \\ -\alpha, & w.p. \quad p, \end{cases}$$

m is a value sampled according to a predetermined probability distribution M and may be used to invert or scale a portion of a gradient. M may determine a stochastic pattern that inverts a predetermined gradient The probability p may control the ratio of a gradient. A portion of a gradient, with a probability of p, may be inverted, while the remaining gradient, with a probability of 1-p, may retain its original direction but may have its magnitude adjusted. α may represent a scaling coefficient that adjusts the magnitude of the inverted gradient. α may determine the magnitude of the inverted gradient with a probability of p.

In summary, the agent 310 may apply a gradient mask m, where a portion of a gradient may be inverted by -α times with a probability of p, while the rest of the gradient may be scaled by $\frac{1}{1-p}$ times with a probability of 1-p, thereby ensuring consistency.

Finally, as expressed by Equation 10 below, for example, the agent 310 may apply the gradient mask m to a gradient and determine the gradient to which the mask is applied.

Equation 10:

$$\nabla J(\pi_\theta)' = m \odot \nabla J(\pi_\theta)$$

In Equation 10, $\odot$ is element-wise multiplication (Hadamard Product) and indicate that each gradient value is adjusted by the corresponding mask value m. An example of a method of stochastically inverting a portion of a gradient is described in detail below with reference to FIG. 6.

As expressed by Equation 11 below, for example, the agent 310 may induce robust adaptive learning through the process of randomly dropping out a parameter update during the process of updating a policy parameter.

Equation 11:

$$\theta_{\text{new}} = \theta_{\text{old}} + \alpha \boxed{G_t \nabla_\theta \ln \pi_{\theta_{\text{old}}}(a_t | s_t)}$$

$$\text{Gradient Dropout} \dashrightarrow g' = g \odot n_b, \quad n_b \sim \frac{Bernoulli(1-p)}{1-p}$$

In Equation 11, the agent 310 may generate a dropout mask based on a Bernoulli distribution and apply the dropout mask to the existing gradient to stochastically update a parameter, thereby efficiently preventing a catastrophic forgetting issue of losing information in the existing learning domain.

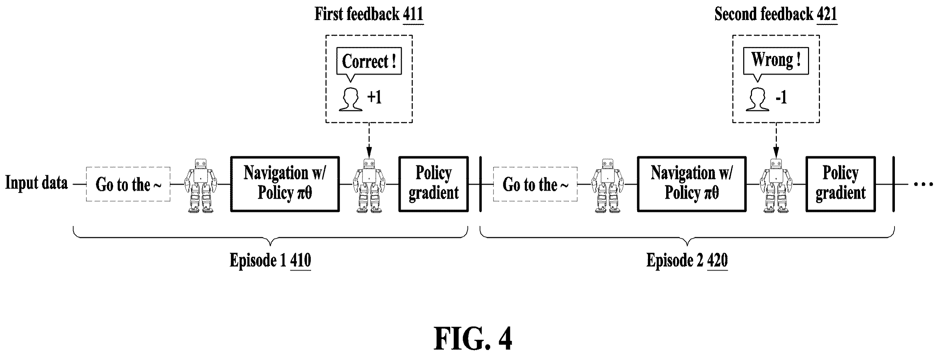

FIG. 4 illustrates an example in which binary feedback is provided in a policy update method according to one or more embodiments. The description provided with reference to FIGS. 1A to 3 may substantially identically apply to FIG. 4.

A system may describe how feedback is provided on an episode basis, where in response to an agent performing navigation following a given policy, binary feedback may be provided based on whether a target point is reached. For example, the agent may not modify the policy while performing navigation and may update the policy by receiving feedback in response to one navigation process (e.g., episode) being terminated and/or completed.

The agent may perform navigation according to input data. The input data may include natural language instructions and environmental information (e.g., sensor data) and may be processed in a policy network and used to determine an optimal action. The agent may perform navigation based on the policy and may receive feedback from an oracle when the navigation is terminated and/or completed.

FIG. 4 illustrates an example in which feedback is provided in each of two episodes 410 and 420. In episode one 410, when an agent reaches a target point, first feedback 411 may be provided. The first feedback 411 may have a value of +1 (success), and a policy network may use this information to strengthen a policy. In episode two 420, when the agent fails to reach the target point, second feedback 421 may be provided. The second feedback 421 may have a value of -1 (failure), and the policy network may be updated based on this to compensate for the navigation failure.

The policy network may operate based on a previously learned policy but may be adjusted to adapt itself by utilizing feedback collected in a test environment. Through this, the method and device of one or more embodiments may improve a generalization ability of a model without the model being overfitted to a predetermined environment.

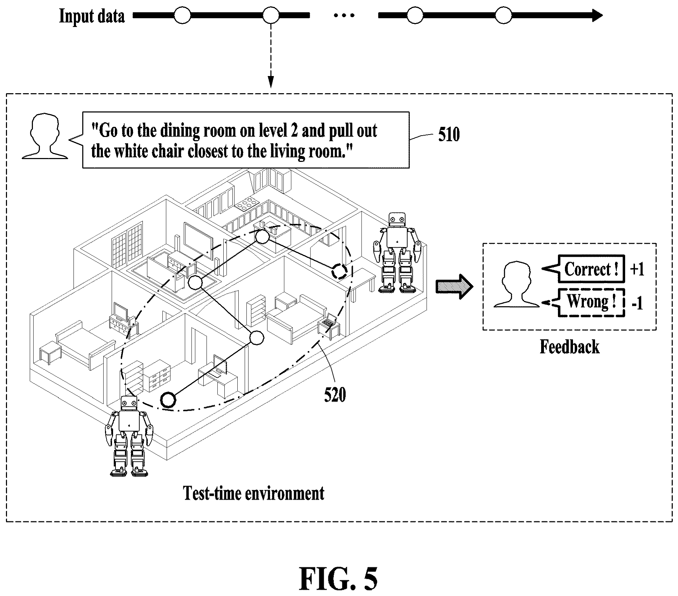

FIG. 5 illustrates an example of a detailed instruction and an episode performed accordingly in a policy update method according to one or more embodiments. The description provided with reference to FIGS. 1A to 4 may substantially identically apply to FIG. 5.

Referring to FIG. 5, a system may describe a process in which an agent interprets a given instruction, performs navigation in an environment, and then receives feedback on an episode basis, based on a VLN model.

Input data may include a natural language instruction 510 and environmental information (sensor data). For example, the instruction 510 such as "Go to the dining room on level 2 and pull out the white chair closest to the living room" may be provided. The agent that receives the instruction 510 may perform an action of going to the dining room located on the second floor in a given environment and then pulling the white chair closest to the living room.

The agent may use sensor data to determine a current location and determine a movement path based on a policy network. For example, the agent may perform an action of going to the second floor by climbing up the stairs, finding the chair closest to the living room inside the dining room, and then pulling that chair. In response to the navigation being terminated and/or completed, the oracle may evaluate a performance result of the agent and provide feedback.

When the agent performs the action exactly according to the instruction 510, the oracle may provide a feedback value of +1 along with the evaluation "Correct!" For example, when the agent goes to a room other than the dining room and/or selects a chair other than the correct chair, the oracle may provide a feedback value of -1 along with the evaluation "Wrong!" In this way, the agent may receive positive or negative feedback depending on whether the agent reaches a target point and the result of performing an action and may update a policy based on the feedback.

FIG. 6 illustrates an example of a process of applying an SGR technique in a policy update method according to one or more embodiments. The description provided with reference to FIGS. 1A to 5 may substantially identically apply to FIG. 6.

FIG. 6 illustrates a comparison between a general gradient update method 610 and a method 620 to which SGR is applied. The general gradient update method 610 may be a case in which the SGR technique is not applied. In the general policy gradient method 610, learning may be performed such that a gradient vector converges to an optimization target (e.g., a minimum value of a loss function). In the general gradient update method 610, a gradient of an individual sample generally follows a convergence direction, and when a predetermined pattern is repeated, there may be a possibility that the gradient may fall into a local optimum during the convergence process.

The method 620 to which SGR is applied may be a case in which the SGR technique is applied. In the SGR technique, one or more gradients may be inverted according to a predetermined probability p. In the method 620 to which SGR is applied, inverted gradients 621 and 622 may be gradient vectors that perform updates in a direction opposite to the original direction.

The SGR technique of one or more embodiments may prevent overfitting to a predetermined pattern and expand a navigation space by stochastically inverting the direction of one or more gradients. For example, when a policy trained on the same data distribution is optimized only in a predetermined direction, generalization performance may deteriorate. However, by stochastically inverting one or more gradients, the method and device of one or more embodiments may achieve more diverse navigation during the learning process, which may increase the likelihood that a policy learns a more general pattern.

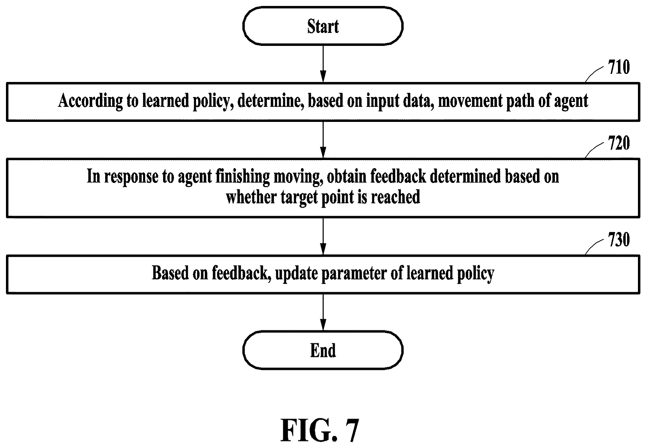

FIG. 7 illustrates an example of a policy update method according to one or more embodiments. The description provided with reference to FIGS. 1A to 6 may substantially identically apply to FIG. 7.

Although operations 710 to 730 of FIG. 7 may be performed in the illustrated order and manner therein, one or more of the operations may be performed in a different order, one or more of the operations may be omitted, two or more of the operations may be performed in parallel or simultaneously, and/or other operations may be additionally performed without departing from the scope of the described embodiments.

In operation 710, according to a learned policy, based on input data, an agent (e.g., the agent 110 of FIG. 1A) may determine a movement path of the agent. The input data may include instruction data (e.g., a natural language instruction) and sensor data (e.g., image data). The movement path may include the navigation trajectory described above.

In operation 720, in response to finishing moving, the agent may obtain feedback determined based on whether a target point is reached. The agent may obtain feedback from an oracle on an episode-by-episode basis.

A policy update method is a process of adapting a pre-learned policy at the test time, so the policy update method may be a method in which the agent receives feedback on the overall performance result in response to an episode ending, rather than predicting the correct answer at every moment (e.g., rather than predicting the correct answer at the completion of every step of the episode). An oracle may determine whether the agent performs navigation correctly during this process and provide feedback (e.g., binary feedback). The oracle may operate based on feedback provided directly by a person, and/or an artificial intelligence-based system may automatically perform an evaluation. For example, a large language model (LLM) may act as an oracle. When the agent performs navigation and requests the LLM to evaluate, the LLM may compare a natural language instruction with a movement result to determine success or failure. For this, the LLM may be provided with "correct answer information" in advance or may infer a correct answer by utilizing environmental data.

The agent may obtain positive value feedback when the agent reaches a target point and negative value feedback when the agent fails to reach the target point. For example, the oracle may provide feedback of +1 when the agent reaches the target point or provide feedback of -1 when the agent fails to reach the target point.

The agent may obtain positive value feedback by applying a first predefined weight when the agent reaches the target point and may obtain negative value feedback by applying a second predefined weight when the agent fails to reach the target point. For example, the oracle may provide feedback of +5 when the agent reaches the target point or feedback of -2 when the agent fails to reach the target point. When feedback is provided as in the example above, the agent may receive a large reward upon reaching the target point, allowing the agent to learn a successful policy more strongly. While learning still occurs in cases of failure, the influence of success may be relatively greater when the agent succeeds. For example, when feedback is provided as described above, it is likely that a policy is "a policy that prioritizes stable success over navigation."

The agent may obtain continuous value feedback based on the distance between the final location of the agent and the target point. For example, the oracle may set a reward based on a distance from a target rather than a simple value of 0 or 1 for success or failure. For example, the oracle may set a reward as a negative correlation with the distance from the target, such that the oracle sets a greater reward value in response to a shorter distance than in response to a longer distance. When feedback is provided as described above, a policy may be improved gradually. Therefore, providing feedback as in the example above may achieve more refined policy updates compared to binary feedback.

In operation 730, the agent may update a parameter of a learned policy based on the feedback. The agent may update one or more parameters of a policy in real time by utilizing feedback during an inference phase rather than training the policy during a training phase.

The agent may update a gradient of the learned policy based on the feedback and update a parameter of the learned policy based on the updated gradient.

The agent may stochastically invert a portion of the updated gradient. The agent may determine whether to invert the updated gradient based on a predefined probability value. When it is determined to invert the updated gradient, the agent may invert the sign of the gradient. The agent may adjust the magnitude of the inverted gradient according to a predefined coefficient.

The policy may be represented by a neural network, and a parameter of the policy may include all learnable parameters (e.g., a weight or a bias) of the neural network. Thus, the agent may update a parameter including a weight of an artificial neural network model that implements the learned policy. The artificial neural network model may be implemented as a reinforcement learning-based VLN model.

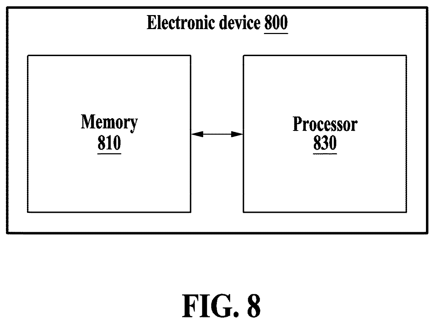

FIG. 8 illustrates an example of an electronic device according to one or more embodiments. The description provided with reference to FIGS. 1A to 7 may substantially identically apply to FIG. 8.

Referring to FIG. 8, an electronic device 800 may include memory 810 (e.g., one or more memories) and a processor 830 (e.g., one or more processors). The electronic device 800 may be or include either one or both of an agent (e.g., the agent 110, the agent 210, and/or the agent 310) and an oracle (e.g., the oracle 120, the oracle 220, and/or the oracle 320) as described above.

The memory 810 may store instructions (or programs) executable by the processor 830. For example, the instructions may include instructions to perform an operation of the processor 830 and/or an operation of each component of the processor 830.

The memory 810 may be implemented as a volatile memory device or a non-volatile memory device.

The volatile memory device may be implemented as dynamic random access memory (DRAM), static RAM (SRAM), thyristor RAM (T-RAM), zero capacitor RAM (Z-RAM), and/or twin transistor RAM (TTRAM).

The non-volatile memory device may be implemented as electrically erasable programmable read-only memory (EEPROM), flash memory, magnetic RAM (MRAM), spin-transfer torque RAM (STT-MRAM), conductive bridging RAM (CBRAM), ferroelectric RAM (FeRAM), phase change RAM (PRAM), resistive RAM (RRAM), nanotube RRAM, polymer RAM (PoRAM), nano floating gate memory (NFGM), holographic memory, a molecular electronic memory device, and/or insulator resistance change memory.

The processor 830 may process data stored in the memory 810. The processor 830 may execute computer-readable code (e.g., software) stored in the memory 810 and instructions triggered by the processor 830. For example, the memory 810 may be or include a non-transitory computer-readable storage medium storing instructions that, when executed by the processor 830, configure the processor 830 to perform any one, any combination, or all of the operations and/or methods disclosed herein with reference to FIGS. 1-8.

The processor 830 may be a hardware-implemented data processing device having a circuit that is physically structured to execute desired operations. The desired operations may include, for example, code or instructions in a program.

For example, the hardware-implemented data processing device may include a microprocessor, a central processing unit (CPU), a processor core, a multi-core processor, a multiprocessor, an application-specific integrated circuit (ASIC), and a field-programmable gate array (FPGA).

The processor 830 may determine a movement path of an agent based on input data according to a learned policy, obtain feedback determined based on whether a target point is reached in response to the agent finishing moving, and update a parameter of the learned policy based on the feedback. The processor 830 may perform the operations described with reference to FIGS. 1A to 7 in substantially the same manner. Accordingly, a detailed description thereof is omitted.

The encoders, electronic devices, memories, processors, encoder 311, encoder 312, electronic device 800, memory 810, and processor 830 described herein, including descriptions with respect to respect to FIGS. 1-8, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component,

or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. **In** addition, processors(s) and controller(s), as a non-limiting example, do not mean human processing or human control, but rather, refer to hardware components as described herein, as non-limiting examples.

The methods illustrated in, and discussed with respect to, FIGS. 1-8 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. **In** one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

**Claims**

1. A processor-implemented method comprising:

   according to a learned policy, determining, based on input data, a movement path of an agent;
   in response to the agent finishing moving, obtaining feedback determined based on whether a target point is reached; and
   based on the feedback, updating a parameter of the learned policy.

2. The method of claim 1, wherein the obtaining of the feedback comprises obtaining the feedback for each episode.

3. The method of claim 1 or 2, wherein the updating of the parameter comprises:

   based on the feedback, updating a gradient of the learned policy; and
   based on the updated gradient, updating the parameter of the learned policy; preferably, wherein the updating of the parameter further comprises stochastically inverting a portion of the updated gradient.

4. The method of claim 3, wherein the inverting of the portion of the updated gradient further comprises:

   according to a predefined probability value, determining whether to invert the updated gradient; and
   in response to a determination to invert the updated gradient, inverting a sign of the updated gradient; preferably, wherein the inverting of the sign of the updated gradient further comprises adjusting a magnitude of the inverted gradient according to a predefined coefficient.

5. The method according to any one of the previous claims, wherein the updating of the parameter comprises updating a parameter comprising a weight of an artificial neural network model configured to implement the learned policy; preferably, wherein the artificial neural network model is implemented as a reinforcement learning-based vision-language navigation (VLN) model.

6. The method according to any one of the previous claims, wherein the obtaining of the feedback comprises:

   in response to the agent reaching the target point, obtaining positive value feedback; and
   in response to the agent failing to reach the target point, obtaining negative value feedback.

7. The method of claim 6, wherein the updating of the parameter of the learned policy comprises:

   in response to the obtaining of the positive value feedback, applying a first predefined weight to the parameter of the learned policy, and
   in response to the obtaining of the negative value feedback, applying a second predefined weight to the parameter of the learned policy.

8. The method of claim 6, wherein the obtaining of the feedback comprises obtaining, based on a distance between a final location of the agent and the target point, continuous value feedback.

9. The method according to any one of the previous claims, further comprising:

   determining whether to generate the feedback based on whether the agent has finished an episode,
   wherein the episode comprises a series of steps and each of the steps comprises a respective action performed by the agent along the movement path, and
wherein the obtaining of the feedback comprises generating feedback based on comparison between a final step of the steps and a target point, in response to determining to generate the feedback.

10. A computer program comprising instructions which, when the program is executed by a computer, cause the computer to carry out the steps of the method according to any one of the previous method claims.

11. An electronic device comprising:

one or more processors comprising processing circuitry; and
memory comprising one or more storage media storing instructions that, when executed individually or collectively by the one or more processors, cause the electronic device to:

according to a learned policy, based on input data, determine a movement path of an agent;
in response to the agent finishing moving, obtain feedback determined based on whether a target point is reached; and
based on the feedback, update a parameter of the learned policy.

12. The electronic device of claim 11, wherein, for the obtaining of the feedback, the execution of the instructions causes the electronic device to obtain the feedback for each episode.

13. The electronic device of claim 11 or 12, wherein, for the updating of the parameter, the execution of the instructions causes the electronic device to:

based on the feedback, update a gradient of the learned policy; and
based on the updated gradient, update a parameter of the learned policy, wherein preferably, for the updating of the parameter, the execution of the instructions causes the electronic device to stochastically invert a portion of the updated gradient.

14. The electronic device of claim 13, wherein, for the inverting of the portion of the updated gradient, the execution of the instructions causes the electronic device to:

according to a predefined probability value, determine whether to invert the updated gradient; and
in response to a determination to invert the updated gradient, invert a sign of the updated gradient, wherein preferably, for the inverting of the sign of the updated gradient, the execution of the instructions causes the electronic device to update a parameter comprising a weight of an artificial neural network model configured to implement the learned policy.

15. The electronic device of any one of claims 11 to 14, wherein, for the obtaining of the feedback, the execution of the instructions causes the electronic device to:

in response to the agent reaching the target point, obtain positive value feedback; and
in response to the agent failing to reach a target point, obtain negative value feedback.

**FIG. 1A**

140

150

160

**FIG. 1B**

Input data → | Agent **210** | → Action → | Oracle **220** | → Feedback

# FIG. 2

FIG. 3

EP 4 779 524 A1

**First feedback 411**

Correct !

👤 +1

**Second feedback 421**

Wrong !

👤 -1

Input data — Go to the ~ | Navigation w/ Policy $\pi\theta$ | Policy gradient | Go to the ~ | Navigation w/ Policy $\pi\theta$ | Policy gradient | · · ·

Episode 1 410

Episode 2 420

# FIG. 4

Input data

"Go to the dining room on level 2 and pull out the white chair closest to the living room." — 510

520

Feedback

Correct ! +1

Wrong ! -1

Test-time environment

FIG. 5

**FIG. 6**

Start

According to learned policy, determine, based on input data, movement path of agent — 710

In response to agent finishing moving, obtain feedback determined based on whether target point is reached — 720

Based on feedback, update parameter of learned policy — 730

End

# FIG. 7

Electronic device <u>800</u>

Memory
<u>810</u>

Processor
<u>830</u>

# FIG. 8

Europäisches
Patentamt

European
Patent Office

Office européen
des brevets

# EUROPEAN SEARCH REPORT

**Application Number**

EP 25 22 1731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN XINYU ET AL: "Prioritized Semantic Learning for Zero-Shot Instance Navigation", 28 November 2024 (2024-11-28), COMPUTER VISION - ECCV 2024; [LECTURE NOTES IN COMPUTER SCIENCE; LECT.NOTES COMPUTER] SPRINGER NATURE SWITZERLAND, CHAM, PAGE(S) 161 - 178, XP047715049, ISSN: 0302-9743 ISBN: 9783031732539 [retrieved on 2024-11-28] * the whole document * | 1-15 | INV. G06N3/08 G06N3/092 |
| A | WILLIAM CHEN ET AL: "Vision-Language Models Provide Promptable Representations for Reinforcement Learning", ARXIV.ORG CORNELL UNIVERSITY LIBRARY, 201 OLIN LIBRARY CORNELL UNIVERSITY ITHACA, NY 14853, 23 May 2024 (2024-05-23), XP091763885, * Sections 1, 3, and 4 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 13 April 2026 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)